# EUROPÄISCHE PATENTSCHRIFT

(11) **EP 3 440 912 B1**
(45) Veröffentlichungstag und Bekanntmachung des Hinweises auf die Patenterteilung: **10.01.2024**
(21) Anmeldenummer: 18188184.8
(22) Anmeldetag: 09.08.2018
(51) Int. Cl.: A01C 23/00

(54) **VERTEILERVORRICHTUNG FÜR FESTSTOFFHALTIGE FLÜSSIGKEITEN**
DISTRIBUTION DEVICE FOR LIQUIDS CONTAINING SOLIDS
DISPOSITIF DE RÉPARTITION POUR LIQUIDES CONTENANT DES MATIÈRES SOLIDES

(30) Priorität: 09.08.2017 DE 202017104786 U
(43) Veröffentlichungstag der Anmeldung: 13.02.2019
(73) Patentinhaber: Vogelsang GmbH & Co. KG, 49632 Essen (DE)
(72) Erfinder: Krampe, Paul, 49632 Essen (DE); Brinkmann, Birgit, 49632 Essen (DE); Mester, Lars, 49632 Essen (DE); Behn, Daniel, 49632 Essen (DE)
(74) Vertreter: Eisenführ Speiser

(56) Entgegenhaltungen:
- EP-A1- 0 079 018
- EP-A1- 1 010 362
- EP-A1- 2 850 928
- EP-A1- 3 175 696
- US-B1- 6 311 716

## Beschreibung

Die Erfindung betrifft eine Verteilervorrichtung für feststoffhaltige Flüssigkeiten, umfassend ein Verteilergehäuse, welches eine Verteilergehäuseunterseite und eine der Verteilergehäuseunterseite gegenüberliegende Verteilergehäuseoberseite aufweist und einen Innenraum umschließt, eine Mehrzahl von Ausgangsöffnungen, eine Eingangsöffnung in dem Verteilergehäuse, eine Belüftungsöffnung in dem Verteilergehäuse, eine relativ zu dem Verteilergehäuse bewegliche und in dem Verteilergehäuse angeordnete Verteilereinheit, welche den Innenraum in einen Flüssigkeitsraum, in den die Eingangsöffnung mündet, und einen Belüftungsraum, in den die Belüftungsöffnung mündet, unterteilt, wobei die relative Bewegung der Verteilereinheit eine Ausgangsöffnung der Mehrzahl von Ausgangsöffnungen wechselweise mit dem Flüssigkeitsraum und dem Belüftungsraum in Verbindung setzt. Verteilervorrichtungen dieser Art werden dazu eingesetzt, um eine feststoffhaltige Flüssigkeit aus einer Zufuhrleitung in mehrere Abfuhrleitungen zu verteilen.

Ein typisches Anwendungsgebiet solcher Verteilervorrichtungen findet sich in der Landwirtschaftstechnik, wo es in vielen Anwendungen darauf ankommt, Flüssigkeiten, die Faseranteile mit sich führen, von einer Leitung auf mehrere Leitungen zu verteilen, beispielsweise um Gülle als Nährstoffreservoir über ein Schleppschlauchgestänge auf einem Feld auszubringen.

Eine grundsätzliche Problematik, die bei der Verteilung solcher feststoffhaltiger Flüssigkeiten auftritt, ist die Verstopfung und die unregelmäßige Verteilung der Flüssigkeit. Durch Verstopfungen kann der Fall auftreten, dass eine einzelne der Mehrzahl von Ausgangsleitungen, auf welche die Flüssigkeit verteilt werden soll, keine Flüssigkeit mehr erhält, so dass dann in einem bestimmten Bereich keine Flüssigkeit mehr zugeteilt wird. Unregelmäßige Verteilungen bedeuten, dass zwar alle Ausgangsleitungen Flüssigkeit erhalten, jedoch in unterschiedlichen Mengen, also unterschiedlichen Flussraten. Dies kann durch unterschiedliche Effekte auftreten, beispielsweise Teilverstopfungen, Strömungseffekte, lokal auftretende Druckwiderstände wie lokaler Überdruck am Ausgang der Ausgangsleitung oder lokaler Unterdruck am Eingang der Ausgangsleitung und weitere Effekte.

Um insbesondere die Gefahr von Verstopfungen durch die feststoffhaltige Flüssigkeit zu verringern ist es bekannt, innerhalb einer solcher Verteilervorrichtung eine Verteilereinheit bereitzustellen, die relativ zu dem Verteilergehäuse, also insbesondere relativ zu den am Verteilergehäuse angeordneten Ausgangsöffnungen beweglich ist. Eine solche Verteilereinheit dient dazu, eine Ausgangsöffnung, wahlweise jede der Mehrzahl von Ausgangsöffnungen in einer zeitlichen Abfolge wechselweise mit einem Flüssigkeitsraum und einem Belüftungsraum innerhalb des Verteilergehäuses zu verbinden. Hierdurch wird die Ausgangsöffnung bzw. jede Ausgangsöffnung nicht permanent ausschließlich in Fluidverbindung mit dem Flüssigkeitsraum und damit der Eingangsöffnung gesetzt, sondern diese Verbindung wird wiederholt entweder unterbrochen und von einer Verbindung mit dem Belüftungsraum ersetzt oder ergänzt, so dass sich eine pulsierende Beaufschlagung der Ausgangsöffnung mit der Flüssigkeit ergibt. Diese pulsierende Beaufschlagung hat den Vorteil, dass sich Verstopfungen nicht bilden bzw. wieder gelöst werden können. Im einfachsten Fall kann eine solche Verteilereinheit beispielsweise durch eine Drehscheibenventilanordnung erfolgen, die die Ausgangsöffnungen wechselweise verschließt und öffnet und in der eine Verbindung zu einem Belüftungsraum für den Verschlussfall vorhanden ist.

Oftmals werden Verteilervorrichtungen für feststoffhaltige Flüssigkeiten auch mit einer Zerkleinerungseinrichtung ausgerüstet, um größere Feststoffe in der Flüssigkeit zu zerkleinern und hierdurch das Risiko einer Verstopfung oder ungleichmäßigen Verteilung weiter zu verringern. Eine solche Zerkleinerungsvorrichtung kann in einem Schneid- oder Häckselwerk realisiert sein, das im Bereich der Eingangsöffnung, ggf. vor die Eingangsöffnung geschaltet, angeordnet ist, oder das in dem Verteilergehäuse angeordnet ist.

Im Stand der Technik sind Verteilervorrichtungen wie beispielsweise der von der Patentanmelderin als "Dosimat LVX" vertriebene Exaktverteiler bekannt, bei denen eine Verteilereinheit im Verteilergehäuse angeordnet ist, die sowohl eine Verteilerfunktion als auch eine Zerkleinerungsfunktion bereitstellt. Hierbei dreht sich im Verteilergehäuse ein zwei- oder dreiflügeliger Rotor dies könnte aber auch ein vier- oder x- flügeliger Rotor sein), der Schneidkanten an den Rotorflügeln aufweist, die die in der unteren Verteilergehäuseseite angeordneten Ausgangsöffnungen überstreichen. Hierdurch wird eine Zerkleinerungsfunktion erzielt. Zugleich wird der Innenraum des Rotors mit der zu verteilenden Flüssigkeit befüllt und daher diejenigen Ausgangsöffnungen, die von den Rotorflügeln überdeckt werden, mit der Flüssigkeit beaufschlagt, wohingegen nicht von den Rotorflügeln überdeckte Ausgangsöffnungen mit einem außerhalb des Rotors ausgebildeten Belüftungsraum verbunden sind, sodass eine pulsierende Beaufschlagung mit Flüssigkeit und Luft auf jede der Ausgangsöffnungen verwirklicht wird, wobei die Frequenz dieser Pulsation dem Zwei- bzw. Dreifachen (je nach Anzahl der Rotorflügel, siehe oben) der Rotordrehzahl entspricht. Da eine Ausgangsöffnung jeweils bei dem Übergang aus dem flüssigkeitsbeaufschlagten Raum in den Belüftungsraum kurzzeitig mit beiden Räumen verbunden ist und diese daher miteinander verbindet, kann es bei diesem Verteiler zu einer Flüssigkeitsansammlung im Belüftungsraum kommen, insbesondere wenn die Flüssigkeit mit Überdruck dem Verteiler zugeführt wird und in einzelnen Ausgangsöffnungen ein hoher Gegendruck, beispielsweise durch eine Verstopfung, auftritt. Durch die Rotordrehung kann es hierdurch zur Verwirbelung der Flüssigkeit oder zur Schaumbildung im Belüftungsraum kommen, mit der Gefahr, dass dann Flüssigkeit oder Schaum durch die Belüftungsöffnungen im Verteilergehäuse nach außen in die Umgebung austritt.

Aus der EP 0079018A1 der Patentinhaberin ist eine Verteilervorrichtung vorbekannt, die einen innerhalb eines Gehäuses liegenden Rotor aufweist, der Gülle aus einem von unten in das Gehäuse erfolgenden Zustrom auf seitliche Verteileröffnungen im Gehäuse verteilt. In der Oberseite des Gehäuses ist eine Verbindungsöffnung zur Umgebung angeordnet, die zur Ansaugung von Luft dienen soll.

Aus EP 2 850 928 A1 ist eine Verteilervorrichtung bekannt, bei der ebenfalls sowohl eine Verteilerfunktion als auch eine Zerkleinerungsfunktion bereitgestellt ist. Dies wird durch eine exzentergeführte Schneidkante erreicht, die als Ringschneide ausgeführt ist und mit Gegenschneiden, die als Ausgangsöffnungen ausgeführt sind und mit den Ausgangsleitungen der Verteilervorrichtung direkt in Verbindung stehen, zusammenwirkt. Die ringförmige Schneide überstreicht durch die Exzenterführung diese Ausgangsöffnungen und verbindet die Ausgangsöffnungen wahlweise mit einem durch die ringförmige Schneide umschriebenen Innenraum oder einem außerhalb dieser ringförmigen Schneide liegenden Außenraum. Der Außenraum ist dabei mit der Eingangsleitung der Flüssigkeit verbunden und stellt daher einen Flüssigkeitsraum dar, der für eine pulsierende Beaufschlagung in zeitlicher Abfolge mit den Ausgangsöffnungen in Fluidverbindung steht.

Der von der ringförmigen Schneide umschriebene Innenraum stellt einen Belüftungsraum dar. Um einen die gleichmäßige Verteilung behindernden Unterdruck in den Ausgangsöffnungen zu verhindern, der durch die Geschwindigkeit und Massenträgheit der durch die Ausgangsleitungen, die an die Ausgangsöffnung angeschlossen sind, fließenden Flüssigkeitspulse entstehen würde, ist dieser Belüftungsraum mit einer Belüftungsöffnung verbunden, die benachbart, radial einwärts von den Ausgangsöffnungen liegt. Dadurch ist diese Belüftungsöffnung in jeder Exzenterstellung der ringförmigen Schneide mit dem Belüftungsraum verbunden und ermöglicht eine Nachführung von Luft hinter jedem Flüssigkeitsdruckpuls in den Ausgangsleitungen.

Grundsätzlich wird mit einer solchen Anordnung im regulären Betrieb der Verteilervorrichtung eine im Wesentlichen gleichmäßige Verteilung der feststoffhaltigen Flüssigkeit auf alle Ausgangsöffnungen erzielt und Verstopfungen können vermieden werden. Durch die gegenüber rotierenden Flügeln reduzierte mechanische Bewegung des exzentergeführten Rotors ist die Verwirbelung und Schaumbildung zudem reduziert. Jedoch kann auch diese Verteilervorrichtung noch weiter verbessert werden. Insbesondere wurde vom Erfinder beobachtet, dass unter besonderen Betriebsbedingungen, wenn eine sehr inhomogene Flüssigkeit durch die Verteilervorrichtung verteilt wird, die eine zeitliche Abfolge einer sehr dünnflüssigen Konsistenz, gefolgt von einer sehr dickflüssigen Konsistenz im Wechsel aufweist, oder wenn ausgangsseitig wechselnde Strömungswiderstände auftreten, die Verteilgenauigkeit beeinträchtigt wird. Der Erfindung liegt die Aufgabe zugrunde, eine Verteilervorrichtung bereitzustellen, welche auch bei Zufuhr von über periodische Zeiträume inhomogenen Flüssigkeiten eine exakte und gleichmäßige Verteilung der Flüssigkeit auf die Ausgangsöffnungen erreicht.

Diese Aufgabe wird erfindungsgemäß durch eine Verteilervorrichtung nach Anspruch 1 gelöst, bei der die Belüftungsöffnung in der Verteilergehäuseoberseite angeordnet ist.

Erfindungsgemäß ist die Belüftungsöffnung in der Verteilergehäuseoberseite angeordnet. Entgegen den vorbekannten Ausführungsformen, bei denen die Belüftungsöffnung aufgrund der dort vorgesehenen direkten Luftführung benachbart zu den Ausgangsöffnungen angeordnet ist und daher aufgrund der notwendigen Anschlussmöglichkeit von Schlauchleitungen entweder in der Seitenwand des Verteilergehäuses oder in der Unterseite des Verteilergehäuses angeordnet ist, wird erfindungsgemäß die Belüftungsöffnung in einer Gehäuseseite angeordnet, die in Einbaulage oben liegt. Diese Position hat verschiedene Vorteile. Zum Einen wird bereits durch die Schwerkraftwirkung verhindert, dass Flüssigkeit drucklos aus dem Innenraum durch die Belüftungsöffnung gelangen kann. Vorteilhaft an der in dieser Anordnung möglichen nicht direkten Benachbarung von Belüftungsöffnungen und Ausgangsöffnungen, die durch die Anordnung der Belüftungsöffnung gemäß der Erfindung erreicht wird, ist weiterhin eine Reduzierung der Verschmutzungsgefahr der Belüftungsöffnung und eine gute Zugänglichkeit der Belüftungsöffnung zur Reinigung derselben, so dass die Gefahr, dass die Belüftungsöffnung verstopft oder ein Ventil, das in der Belüftungsöffnung eingesetzt ist, durch Verschmutzung funktionsbeeinträchtigt wird, verringert ist. Schließlich wird durch die in dieser Anordnung möglichen nicht direkten Benachbarung von der Belüftungsöffnung zu den Ausgangsöffnungen eine Angleichung des Verlaufs und der Länge der Strömungswege zwischen der Belüftungsöffnung und jeder der Ausgangsöffnungen erreicht, wohingegen im Stand der Technik einige Ausgangsöffnungen einen sehr kurzen Strömungsweg zur Belüftungsöffnung aufwiesen, andere jedoch einen relativ hierzu sehr langen Strömungsweg, was zu unterschiedlichen Strömungseigenschaften in den an diese Ausgangsöffnung angeschlossenen Ausgangsleitungen führen kann.

Gemäß einer ersten bevorzugten Ausführungsform ist vorgesehen, dass die Ausgangsöffnungen in oder benachbart zu der Verteilergehäuseunterseite angeordnet sind. Die Anordnung der Ausgangsöffnungen in der Verteilergehäuseunterseite oder benachbart hierzu ergibt eine besonders strömungsgünstige Anordnung sowohl in Bezug auf die Luftführung innerhalb des Verteilergehäuses als auch in Bezug auf die Flüssigkeitsführung innerhalb des Verteilergehäuses. Erfindungsgemäß ist die Eingangsöffnung in der Gehäuseoberseite angeordnet. Hierdurch wird eine nahezu gradlinige Strömungsführung von der Eingangsöffnung zu den Ausgangsöffnungen realisiert.

Insbesondere in Verbindung mit der Belüftungsöffnung in der Gehäuseoberseite können dann identische Strömungswegrichtungen für die Luftführung und die Flüssigkeitsführung im Verteilergehäuse realisiert werden. Weiterhin ist vorteilhaft, dass die Anordnung der Ausgangsöffnungen in oder benachbart zur Verteilergehäuseunterseite eine nahezu gleiche Strömungsweglänge von der Belüftungsöffnung zu jeder der Ausgangsöffnungen erzielt, wodurch nachteilige Effekte durch unterschiedliche Belüftungsweglängen vollständig oder weitestgehend vermieden werden können. Erfindungsgemäß liegen die Ausgangsöffnungen bei dieser Ausführungsform folglich gegenüber zu der Belüftungsöffnung, mit der die jeweiligen Ausgangsöffnungen belüftet werden.

Noch weiter ist es bevorzugt, wenn in der Verteilergehäuseoberseite keine Ausgangsöffnung angeordnet ist. Durch den Verzicht auf eine Anordnung einer Ausgangsöffnung in der Verteilergehäuseoberseite kann die Verteilergehäuseoberseite im Wesentlichen geschlossen ausgeführt werden und weist lediglich die Belüftungsöffnung und ggf. die oder mehrere Eingangsöffnungen auf. Hierdurch wird zum Einen ein für Wartungs- und Reinigungszwecke verbesserter Aufbau der Verteilervorrichtung erzielt. Des Weiteren kann durch die räumliche Trennung der Belüftungsöffnung von den Ausgangsöffnungen eine für die Strömungsführung der Luft und der Flüssigkeit im Innenraum günstige Aufteilung realisiert werden, die im Gegensatz zum Stand der Technik große Strömungsquerschnitte zwischen der Eingangsöffnung und den Ausgangsöffnungen im Innenraum ermöglicht und daher die Gefahr der Verstopfung im Innenraum vermindert. Durch den Verzicht auf eine Ausgangsöffnung in der Gehäuseoberseite wird zudem eine Anordnung der Ausgangsöffnungen in einer Seitenwand, in mehreren Seitenwänden und/oder in der Gehäuseunterseite erforderlich, was zu den zuvor erläuterten Vorteilen führt.

Alternativ ist zu verstehen, dass die erfindungsgemäßen Vorteile auch in geringfügig verminderter Form erzielt werden können, wenn eine einzelne oder eine Anzahl von weniger als fünf Ausgangsöffnungen in der Gehäuseoberseite angeordnet sind, nicht jedoch eine Mehrzahl von Ausgangsöffnungen.

Es ist weiter bevorzugt, dass das Verteilergehäuse eine Verteilergehäusebasis und einen mit der Verteilergehäusebasis lösbar verbundenen Verteilergehäusedeckel umfasst und dass der Verteilergehäusedeckel die Verteilergehäuseoberseite und eine Verteilergehäuseseitenwand aufweist, die sich von der Verteilergehäuseoberseite zu der Verteilergehäuseunterseite erstreckt. Gemäß dieser Fortbildung wird durch eine Seitenwand des Deckels des Verteilergehäuses eine Beabstandung der Verteilergehäuseoberseite von der Verteilergehäuseunterseite erreicht, wodurch die Belüftungsöffnung vertikal beabstandet von der Verteilergehäuseunterseite angeordnet ist und ein unerwünschter Austritt von Flüssigkeit oder ausgebildetem Schaum durch die Belüftungsöffnung aufgrund der Schwerkraftwirkung unterdrückt wird. Die Belüftungsöffnung liegt bevorzugt im Bereich einer nach vertikal aufwärts ausgeformten Gehäusekuppel, die durch die Verteilergehäuseseitenwand und die Verteilergehäuseoberseite gebildet wird. Insbesondere ist hierbei zu verstehen, dass die Verteilergehäuseunterseite an der Verteilergehäusebasis ausgebildet ist und hierdurch eine leichte Zugänglichkeit der Ausgangsöffnungen erreicht wird, wenn der Verteilergehäusedeckel geöffnet wird.

Gemäß einer weiteren bevorzugten Ausführungsform ist vorgesehen, dass die Belüftungsöffnung durch ein Rückschlagventil abgedichtet ist, welches ausgebildet ist, um den Austritt von Fluid aus dem Belüftungsraum durch die Belüftungsöffnung zu sperren und den Zufluss von Luft durch die Belüftungsöffnung in den Belüftungsraum freizugeben. Durch eine Abdichtung der Belüftungsöffnung mit einem solchen Rückschlagventil wird erreicht, dass durch die Belüftungsöffnung Luft von außerhalb des Verteilergehäuses in den Belüftungsraum strömen kann, nicht jedoch eine Strömung aus dem Belüftungsraum nach auswärts in die Umgebung des Verteilergehäuses durch die Belüftungsöffnung stattfinden kann. Hierdurch wird insbesondere verhindert, dass feststoffhaltige Flüssigkeit bei Fehlfunktionen oder Überlastungssituationen der Verteilervorrichtung durch die Belüftungsöffnung nach außen treten kann. Das Rückschlagventil kann insbesondere ein elastisch vorgespanntes Rückschlagventil sein, dessen Schließfunktion durch eine elastische Vorspannung in die Schließstellung unterstützt wird. Das Rückschlagventil kann auch durch andere Kraftwirkungen, beispielsweise durch Schwerkraft in die Schließstellung gedrückt sein oder kann als besonders leichtgängiges Rückschlagventil solcherart ausgeführt sein, dass es ausschließlich durch Strömungs- oder Druckeinflüsse in die offene Stellung bzw. in die Sperrstellung bewegt wird.

Dabei ist es besonders bevorzugt, wenn das Rückschlagventil durch eine Dichtungsmembran gebildet wird, die elastisch in eine Sperrstellung vorgespannt ist, in welcher der Austritt von Fluid aus dem Belüftungsraum durch die Belüftungsöffnung gesperrt ist und die durch einen relativen Unterdruck im Belüftungsraum gegenüber der Belüftungsöffnung in eine Offenstellung bewegbar ist, in welcher der Zufluss von Luft durch die Belüftungsöffnung in den Belüftungsraum freigegeben ist. Unter einer Dichtungsmembran ist hierbei ein Flächenelement zu verstehen, welches durch eine Eigenspannung oder durch separat bereitgestellte elastische Elemente, beispielsweise eine Metallfeder, in eine Stellung vorgespannt ist, in der die Belüftungsöffnung verschlossen ist, so dass keine Flüssigkeit aus dem Innenraum durch die Belüftungsöffnung nach außen treten kann. Die Membran ist hierbei ggf. nur solcherart vorgespannt, dass eine leichte Anlage der Membran an einem Ventildichtungssitz erreicht wird. Diese Anlage mit geringer Kraft kann durch Einwirken einer Druckkraft auf die Dichtungsmembran sich solcherart erhöhen, dass auch dann, wenn eine Flüssigkeit mit erhöhtem Druck aus dem Innenraum auf die Belüftungsöffnung einwirkt, eine sichere Abdichtung durch die Dichtungsmembran erzielt wird. Grundsätzlich kann die Dichtungsmembran dabei so ausgeführt sein, dass sie beispielsweise in die Belüftungsöffnung bündig eingesetzt ist und auf einem Rahmen oder Gerüst aufliegt und hierdurch die Belüftungsöffnung in vollem Querschnitt verschließt, wobei das Gerüst in Strömungsrichtung der Luft von außen durch die Einlassöffnung in den Belüftungsraum vor der Dichtungsmembran angeordnet ist, so dass sich die Dichtungsmembran unter Einwirkung einer Luftströmung von außen in den Belüftungsraum von dem Rahmen bzw. Gerüst abheben kann und den Strömungsweg für die Luft freigibt. Die Dichtungsmembran kann auch in anderer Weise ausgeführt sein, beispielsweise indem sie mit ihrem Rand an einer ringförmigen Dichtungsfläche anliegt und hierdurch die Abdichtung bewirkt.

Erfindungsgemäß ist vorgesehen, dass die Eingangsöffnung in einen Einlasskanal mündet, der sich von der Verteilergehäuseoberseite in den Flüssigkeitsraum erstreckt. Bei dieser Ausführungsform ist die Einlassöffnung an einem Einlasskanal ausgebildet und hierdurch wird die Durchleitung der durch die Einlassöffnung eintretenden feststoffhaltigen Flüssigkeit in den Innenraum bis zum Flüssigkeitsraum innerhalb des Verteilergehäuses durch den Einlasskanal ermöglicht. Insbesondere kann sich der Einlasskanal durch den Belüftungsraum erstrecken und hierdurch eine zuverlässige Trennung des Belüftungsraums von dem Flüssigkeitsraum im Innenraum erreichen.

Dabei wird die Belüftungsöffnung durch einen Ringspalt um einen Einlasskanal, in den die Einlassöffnung mündet, gebildet. Grundsätzlich ist zu verstehen, dass die Eingangsöffnung zentral auf der Gehäuseoberseite angeordnet sein kann und sich der Einlasskanal entsprechend zentral entlang einer Mittelachse der Verteilervorrichtung erstreckt. Insbesondere ist es dabei bevorzugt, wenn die Dichtungsmembran durch einen um den Einlasskanal angeordneten Elastomerring gebildet wird, insbesondere durch eine elastomere Ringscheibe. Ein solcher Elastomerring bzw. eine solche elastomere Ringscheibe kann beispielsweise an der Außenfläche des Einlasskanals abgedichtet befestigt sein und mit ihrer kreisförmigen Außenkante oder einem Ringflächenabschnitt im Bereich der Außenkante an einer Ventilsitzfläche anliegen und hierdurch die Dichtung bewirken. Die Ventilsitzfläche kann beispielsweise an der Innenfläche der Gehäuseoberseite ausgeführt sein. Auf diese Weise wird eine zuverlässige Vorspannung und Abdichtung gegenüber dem Austritt von Flüssigkeit durch die Belüftungsöffnung nach außen erzielt, zugleich aber eine leichtgängige und geräuscharme Öffnung des Rückschlagventils, dass durch die Dichtungsmembran gebildet wird, für den Eintritt von Luft durch die Belüftungsöffnung in dem Belüftungsraum.

Noch weiter ist es bevorzugt, wenn die Belüftungsöffnung im Bereich einer domartigen Auswärtswölbung der Verteilergehäuseoberseite angeordnet ist. Unter einer domartigen Auswärtswölbung der Verteilergehäuseoberseite ist hierbei zu verstehen, dass sich ein Bereich, der die Belüftungsöffnung und ggf. auch die Eingangsöffnung aufweist, gegenüber dem sonstigen Bereich der Gehäuseoberseite nach außen weiter erstreckt, insbesondere konvex nach außen vorgewölbt ist oder aber eine stufenförmige Ausformung nach außen aufweist. Durch eine solche Geometrie wird erreicht, dass die Belüftungsöffnung noch weiter erhöht angeordnet ist und hierdurch gegenüber Verschmutzungen besser geschützt ist und einen schwerkraftbedingten Rückfluss von Flüssigkeit durch die Belüftungsöffnung weiter verhindert.

Noch weiter ist es bevorzugt, dass die Verteilereinheit ein Dichtungselement umfasst, dass zwischen einer ersten Position, in der es zumindest eine der Mehrzahl von Ausgangsöffnungen gegen den Belüftungsraum abdichtet und einer zweiten Position, in der es eine Fluidverbindung zwischen der zumindest einen der Mehrzahl von Ausgangsöffnungen und dem Belüftungsraum herstellt, beweglich ist. Gemäß dieser Ausführungsform wird ein Dichtungselement der Verteilereinheit bewegt zwischen einer ersten und einer zweiten Position, um wechselweise die Ausgangsöffnungen mit dem Belüftungsraum zu verbinden und gegen den Belüftungsraum abzudichten. Insbesondere kann das Dichtungselement in der ersten Position die Ausgangsöffnungen gegen den Belüftungsraum abdichten und mit dem Flüssigkeitsraum verbinden, so dass durch das Dichtungselement eine wechselweise Verbindung der Belüftungsöffnung mit dem Flüssigkeitsraum und mit dem Belüftungsraum erzielt wird. Hierdurch wird eine gewünschte pulsierende Beaufschlagung der Ausgangsöffnungen mit der feststoffhaltigen Flüssigkeit erzielt und insbesondere eine Nachführung von Luft aus dem Belüftungsraum in der Phase ermöglicht, in welcher die Ausgangsöffnungen gegen den Flüssigkeitsraum abgedichtet sind. Grundsätzlich kann die Bewegung des Dichtungselements periodisch erfolgen, beispielsweise durch eine reziproke Bewegung oder eine Bewegung auf einer kreisförmigen Bahn, eine Exzenterbewegung oder dergleichen, um im Wechsel zwischen der ersten und der zweiten Position das Dichtungselement zu positionieren.

Noch weiter ist es bevorzugt, wenn das Dichtungselement der Verteilereinheit ausgebildet ist, um jede der Ausgangsöffnungen in zeitlich wechselnder Abfolge mit dem Flüssigkeitsraum und mit dem Belüftungsraum zu verbinden. Gemäß dieser Ausführungsform wird jede der Ausgangsöffnungen in entsprechend zeitlich wechselnder Abfolge mit dem Flüssigkeitsraum und dem Belüftungsraum verbunden, was insbesondere erfolgen kann wie zuvor bezüglich der ersten und zweiten Position des Dichtungselements und einer sich wiederholenden Positionierung des Dichtungselements in dieser ersten und zweiten Position in einer Folge. Dabei kann das Dichtungselement insbesondere dann, wenn es eine oder mehrere Ausgangsöffnungen mit dem Flüssigkeitsraum verbindet, diese eine oder mehrere Ausgangsöffnungen zugleich gegen den Belüftungsraum abdichten und entsprechend umgekehrt dann, wenn das Dichtungselement eine oder mehrere Ausgangsöffnungen mit dem Belüftungsraum verbindet, diese Ausgangsöffnung oder die mehreren Ausgangsöffnungen gegen den Flüssigkeitsraum abdichten. Grundsätzlich kann das Dichtungselement solcherart ausgebildet sein, dass es zu einem Zeitpunkt einige der Ausgangsöffnungen mit dem Belüftungsraum verbindet und die übrigen Ausgangsöffnungen mit dem Flüssigkeitsraum verbindet. Das Verhältnis der Anzahl der Ausgangsöffnungen, die mit dem Flüssigkeitsraum verbunden sind zu den Ausgangsöffnungen, die mit dem Belüftungsraum verbunden sind kann 1:1 sein, insbesondere können aber auch mehr Ausgangsöffnungen nur mit dem Flüssigkeitsraum verbunden sein als mit dem Belüftungsraum, um hierdurch eine hohe Volumenrate an Flüssigkeit durch die Verteilervorrichtung zu erzielen.

Die Verteilervorrichtung kann weiter fortgebildet werden durch eine in dem Innenraum angeordnete Zerkleinerungseinheit für Feststoffe in der feststoffhaltigen Flüssigkeit. Eine solche Zerkleinerungseinheit im Innenraum der Verteilervorrichtung kann große Feststoffe in der Flüssigkeit zerkleinern und hierdurch die Gefahr von Verstopfungen und einer ungleichmäßigen Verteilung der Flüssigkeit verringern. Die Zerkleinerungsvorrichtung kann beispielsweise durch bewegte Messer oder ein Häckselwerk verwirklicht sein. Grundsätzlich kann die Zerkleinerungswirkung durch Trennkräfte nach Art eines Schnittes, einer Scherung, einer Zerreißwirkung bewirkt werden.

Die Zerkleinerungseinheit kann dabei bevorzugt durch ein benachbart zur Verteilergehäuseunterseite angeordnete erstes Schneidelement mit ersten Schneidkanten und ein auf diesem ersten Schneidelement aufliegendes zweites Schneidelement, das relativ zu dem ersten Schneidelement beweglich ist und zweite Schneidkanten aufweist, gebildet werden. Hierdurch wird eine Scher- und Schneidwirkung erzielt, die wirksam im unteren Bereich des Verteilergehäuses für eine Zerkleinerung von Feststoffen sorgt. Die ersten Schneidkanten können dabei bevorzugt durch Ränder von Öffnungen, die mit den Ausgangsöffnungen in Fluidverbindung stehen, insbesondere fluchtend zu diesen liegen, gebildet werden. Diese Ausführungsform ist insbesondere vorteilhaft in Verbindung mit der zuvor erläuterten Ausführung mit einem Verteilergehäusedeckel, der eine Verteilergehäuseseitenwand und eine Verteilergehäuseoberseite umfasst, da durch diese Zusammenwirkung eine besonders gute Zugänglichkeit der Schneidkanten und Ausgangsöffnungen für Wartungszwecke bei geöffnetem Verteilergehäusedeckel erreicht wird, zugleich aber die Gefahr eines unerwünschten Austritts von Flüssigkeit durch die Belüftungsöffnung reduziert wird.

Es ist noch weiter bevorzugt, dass die Verteilereinheit die Zerkleinerungseinheit umfasst. Hierdurch wird ein kompakter Aufbau der Verteilervorrichtung erreicht, indem die Zerkleinerungseinheit in der Verteilereinheit enthalten oder mit dieser integral ist.

Es ist dabei besonders bevorzugt, wenn die relative Bewegung der Verteilereinheit eine Zerkleinerungswirkung durch die Zerkleinerungseinheit bewirkt. Bei dieser Ausführungsform wird die für die Verteilung der Flüssigkeit auf die Ausgangsöffnungen in pulsierender Weise notwendige Bewegung der Verteilereinheit zugleich dazu genutzt, um die Zerkleinerungsvorrichtung anzutreiben und die Zerkleinerungswirkung zu erzielen. Dies ermöglicht es, einen einzigen Antrieb für die Verteilerfunktion und die Zerkleinerungsfunktion zu benutzen. Insbesondere kann ausgehend von diesem einzigen Antrieb eine einzige Antriebsdurchleitung in das Gehäuse vorgesehen sein, um eine robuste und gut abgedichtete Gehäusekonstruktion zu erzielen. Die Bewegung kann dabei beispielsweise eine Rotationsbewegung oder eine Exzenterbewegung sein.

Dabei ist es weiterhin besonders bevorzugt, wenn die Zerkleinerungseinheit ein Schneidelement beinhaltet, dass integral mit dem Dichtungselement ist. Bei dieser Ausführungsform sind Zerkleinerungsvorrichtung und Dichtungselement integral, also durch ein Bauteil bzw. eine Kombination von miteinander verbundenen Bauteilen realisiert. Insbesondere kann das Dichtungselement beispielsweise durch eine Schneide verkörpert sein, die mit einer Gegenschneide oder mehreren Gegenschneiden zusammenwirkt und hierdurch eine Scherwirkung als Zerkleinerungswirkung erreicht, wenn das Dichtungselement bewegt wird. So kann beispielsweise durch die Kanten der Ausgangsöffnungen eine Gegenschneide bereitgestellt werden, über welche eine beispielsweise ringförmige Schneide hinwegbewegt wird und hierdurch eine Scherwirkung mit Zerkleinerungswirkung erreicht werden.

Eine bevorzugte Ausführungsform wird anhand der beiliegenden Figuren erläutert. Es zeigen:

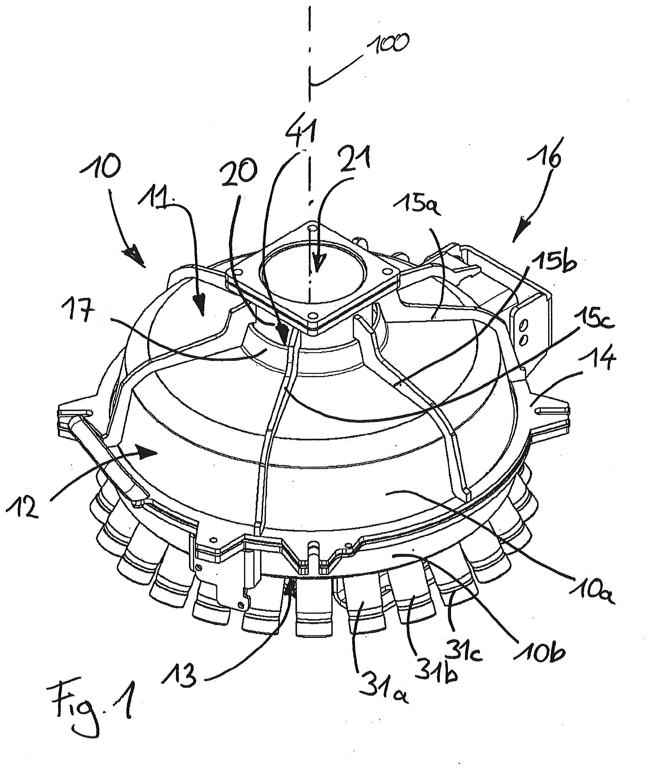

- Fig. 1: Eine perspektivische Ansicht einer erfindungsgemäßen Verteilervorrichtung von schräg seitlich oben,
- Fig. 2: Eine perspektivische Ansicht der Ausführungsform gemäß Figur 1 mit abgenommenen Verteilergehäusedeckel,

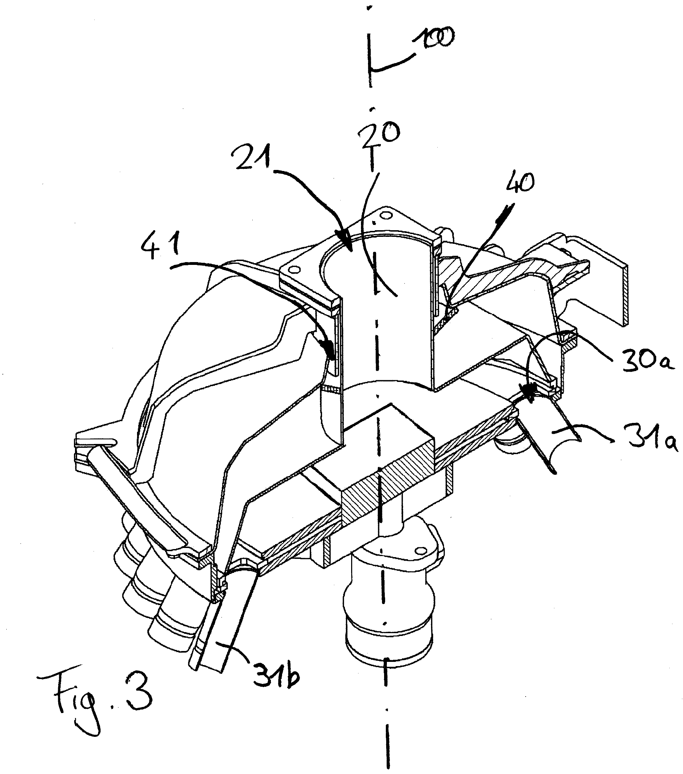

- Fig. 3: Eine längsgeschnittene perspektivische Ansicht der Ausführungsform gemäß Fig. 1,

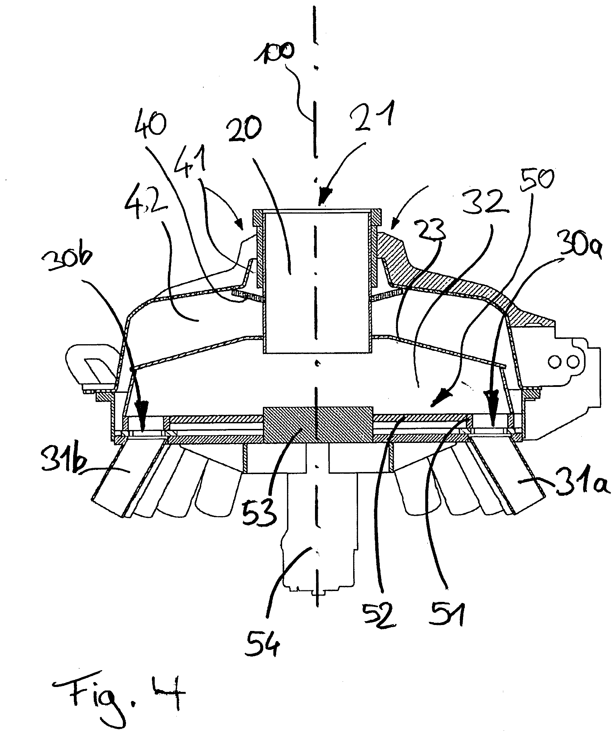

- Fig. 4: Eine längsgeschnittene Seitenansicht der Ausführungsform gemäß Fig. 1, und
- Fig. 5: eine Ansicht gemäß Figur 4 mit anderer Rotationsposition des Rotors und eingezeichneten Strömungswegen.

Die Verteilervorrichtung gemäß der Erfindung weist ein Verteilergehäuse 10 auf, welches eine Verteilergehäuseoberseite 11, eine Verteilergehäuseseitenwand 12 und eine Verteilergehäuseunterseite 13 umfasst. Die Verteilergehäuseunterseite 13 ist gegenüberliegend zur Verteilergehäuseoberseite 11 angeordnet. Die Verteilergehäuseseitenwand ist als etwa zylindrische, leicht konisch nach oben verlaufende Wandung ausgeführt und verbindet die Verteilergehäuseoberseite mit der Verteilergehäuseunterseite. Das Verteilergehäuse ist grundsätzlich durch einen Verteilergehäusedeckel 10a und eine Verteilergehäusebasis 10b gebildet. Das Verteilergehäuse wird im Bereich der Verteilergehäusebasis 10b an einem Rahmengestell, einem Halter oder dergleichen an einem Fahrzeug oder einem Anhänger oder auch stationär befestigt, sodass die Verteilergehäuseunterseite zu Wartungszwecken nicht bewegt werden kann, was auch zweckmäßig und zwangsläufig ist, da an der Verteilergehäuseunterseite alle Schlauchleitungen befestigt sind.

Der Verteilergehäusedeckel ist mittels einer Scharniers 16 mit der Verteilergehäusebasis verbunden, so dass der Verteilergehäusedeckel zu Wartungszwecken aufgeklappt werden kann. Entlang eines umlaufenden Flanschbereichs 14 sind die Verteilergehäusebasis und der Verteilergehäusedeckel miteinander lösbar und flüssigkeitsdicht verbindbar. Hierdurch wird ein Zugang zum Innenraum des Verteilergehäuses für Wartungs- und Reinigungszwecke leicht ermöglicht und eine zuverlässige Abdichtung erreicht.

Die Verteilergehäuseoberseite ist integral mit der Verteilergehäuseseitenwand an dem Verteilergehäusedeckel angeordnet. Dadurch liegt die Verteilergehäuseoberseite vertikal beabstandet von dem Flanschbereich 14 und der Verteilergehäuseunterseite.

Die Verteilergehäuseoberseite 11 und die Verteilergehäuseseitenwand 12 ist durch mehrere Rippen 15a, b, c verstärkt, um eine hohe Steifigkeit des Verteilergehäusedeckels 10a zu erzielen. Der Verteilergehäusedeckel 10a kann daher beispielsweise aus Kunststoff gefertigt sein.

Der Verteilergehäusedeckel ist nach Art einer abgeflachten Kuppel geformt, wobei die Verteilergehäuseseitenwand 13 die sich vertikal erstreckenden Abschnitte der Kuppel bilden und die Verteilergehäuseoberseite 11 den sich horizontal erstreckenden Abschnitt der Kuppel. Die Verteilergehäuseoberseite 11 weist eine zentrale, domartige Erhöhung 17 auf, durch die sich ein Einlasskanal 20 in axialer Richtung in Bezug auf eine Mittellängsachse 100 erstreckt. Der Einlasskanal 20 erstreckt sich von einer an dem obersten Punkt der Verteilervorrichtung gelegenen Einlassöffnung 21 in den Innenraum des Verteilergehäuses 10.

In der Gehäuseunterseite 13 sind eine Mehrzahl von Ausgangsöffnungen 30 a, b angeordnet, an die sich ein jeweiliger Ausgangsanschlussstutzen 31a, b, c anschließt. Jeder Ausgangsanschlussstutzen 31a, b, c erstreckt sich in im Wesentlichen axialer Richtung in Bezug auf die Mittellängsachse 100 und ist leicht schräg auswärts radial geneigt. Hierdurch können an die Ausgangsanschlussstutzen 31a, b leicht und ohne Montagehindernisse Ausgangsschläuche angeschlossen werden. Zwischen der domartigen Auswölbung 17 an der Verteilergehäuseoberseite und dem Einlasskanal 20 ist ein Ringspalt 41 ausgebildet, durch den Luft aus der Umgebung in das Verteilergehäuse einströmen kann. Der Ringspalt 41 dient als Belüftungsöffnung.

Der Einlasskanal 20 erstreckt sich ausgehend von der Einlassöffnung bis auf etwa die halbe Höhe des Innenraums im Verteilergehäuse 10. Der Einlasskanal 20 mündet auf dieser Höhe in einem Flüssigkeitsraum 32, der durch eine Trennwand 23 von einem Belüftungsraum 42 getrennt ist. Der Belüftungsraum 42 kann durch zuströmende Luft durch die Belüftungsöffnung 41 belüftet werden. Zwischen dem Ringspalt 41, der die Belüftungsöffnung bildet und dem Belüftungsraum 42 ist ein Rückschlagventil angeordnet, das durch eine ringscheibenförmige Dichtungsmembran 40 gebildet wird. Die Dichtungsmembran 40 ist mit einer inneren umlaufenden Kante an der Außenseite des Einlasskanals 20 befestigt und liegt mit einer äußeren umlaufenden Kante an der Innenseite der Verteilergehäuseoberseite dichtend an. In der in den Figuren dargestellten Position ist die Dichtungsmembran 40 in vorgespannter Lage gezeigt, in der sie in Sperrstellung zur Verhinderung des Austritts von Fluid aus dem Belüftungsraum 42 durch den Ringspalt 41 ist.

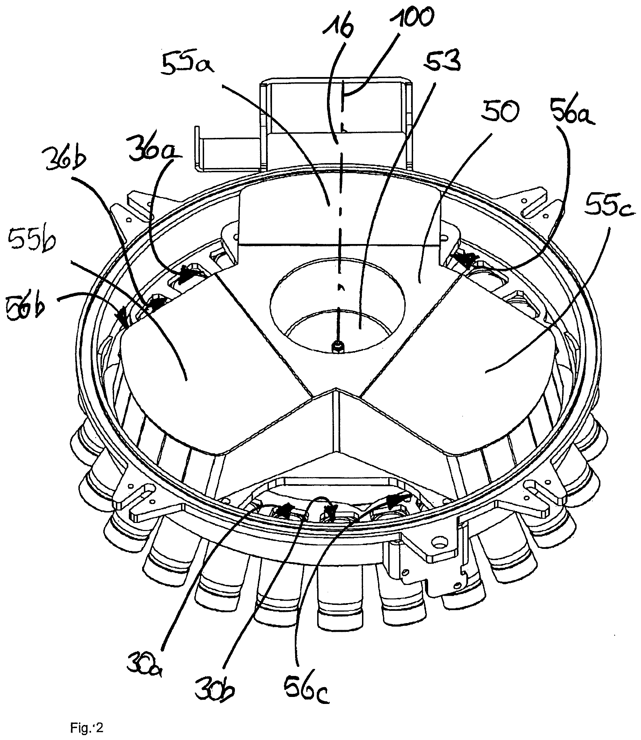

Die Ränder der Ausgangsöffnungen 30a, b bilden eine obere plane Auflagefläche eines Schneidsiebs, das durch eine ringförmige Lochplatte gebildet wird. Auf dem Schneidsieb liegt ein in Figur 2 erkennbarer, um die Mittellängsachse 100 rotierender dreiflügeliger Schneidrotor 50 auf. Der Schneidrotor 50 weist insgesamt drei sich radial von einer Nabe 53 aus erstreckende Rotorflügel 55a-c auf, an deren zum Schneidsieb weisenden unteren Rändern ein Schneidmesser 51 mit Schneidkanten 56a-c ausgebildet ist. Der Schneidrotor 50 mit den Schneidrotoren 55a-c weist einen inneren Hohlraum 32 auf, der mit dem Einlasskanal 20 in Verbindung steht und hierdurch flüssigkeitsgefüllt ist. Dieser Hohlraum 32 stellt den Flüssigkeitsraum innerhalb des Verteilergehäuses dar.

Die Nabe 53 wird mittels eines unterhalb der Verteilergehäuseunterseite angeordneten Antriebsmotors 54 in Rotation um die Mittellängsachse versetzt . Die nabe ist mittels einer unteren Rotorplatte 52 mit dem Schneidmesser 51 verbunden. Durch diese Rotationsbewegung wird eine Scherwirkung der Schneidkanten 56a-c in Zusammenwirkung mit den oberen Kanten 36a,b,... der Öffnungen des Lochsiebs erzielt und dadurch größere Feststoffe wirksam zerkleinert. Zugleich wird durch die Rotationsbewegung des Schneidrotors jede der Ausgangsöffnungen 30a, b wechselweise mit dem im Schneidrotor ausgebildeten Flüssigkeitsraum 32 und dem Belüftungsraum 42 verbunden. Dies bewirkt eine pulsierende Beaufschlagung der Ausgangsöffnungen 30a, b mit Flüssigkeit mit der Möglichkeit einer Nachführung von Luft aus dem Belüftungsraum.

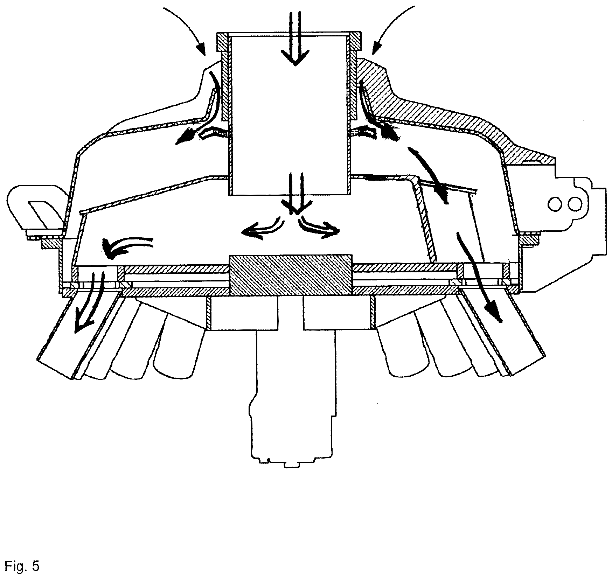

Fig. 5 zeigt die Luftführung durch den Verteiler als einfache Pfeile und die Flüssigkeitsführung als Doppelpfeile. Der Rotor ist hierbei in einer Drehlage gezeigt, bei der die Ausgangsöffnungen auf der linken Gehäuseseite mit Flüssigkeit beaufschlagt werden und die Ausgangsöffnungen auf der rechten Gehäuseseite mit Luft beaufschlagt werden

## Patentansprüche

1. Verteilervorrichtung für feststoffhaltige Flüssigkeiten, umfassend:
- Ein Verteilergehäuse (10), welches eine Verteilergehäuseunterseite (13) und eine der Verteilergehäuseunterseite gegenüberliegende Verteilergehäuseoberseite (11) aufweist und einen Innenraum umschließt, der in einen Flüssigkeitsraum, in den die Eingangsöffnung mündet, und einen hiervon getrennten Belüftungsraum, in den die Belüftungsöffnung mündet, unterteilt, ist,
- Eine Mehrzahl von Ausgangsöffnungen (30a,b),
- Eine Eingangsöffnung (21) in dem Verteilergehäuse,
- Eine Belüftungsöffnung (41) in dem Verteilergehäuse,
- Eine relativ zu dem Verteilergehäuse bewegliche und in dem Verteilergehäuse angeordnete Verteilereinheit (50), welche eine, vorzugsweise jede der Ausgangsöffnungen in zeitlich wechselnder Abfolge mit dem Flüssigkeitsraum (32) und mit dem Belüftungsraum (42) in Fluidverbindung setzt,
wobei die relative Bewegung der Verteilereinheit eine Ausgangsöffnung der Mehrzahl von Ausgangsöffnungen wechselweise mit dem Flüssigkeitsraum und dem Belüftungsraum in Verbindung setzt,
wobei
die Belüftungsöffnung (41) in der Verteilergehäuseoberseite (11) angeordnet ist,
**dadurch gekennzeichnet, dass**
die Eingangsöffnung in einen Einlasskanal (20) mündet, der sich von der Verteilergehäuseoberseite in den Flüssigkeitsraum erstreckt,
wobei die Belüftungsöffnung durch einen Ringspalt um den Einlasskanal, in den die Einlassöffnung mündet, gebildet wird.

2. Verteilervorrichtung nach Anspruch 1,
**dadurch gekennzeichnet, dass** die Ausgangsöffnungen (30a,b) in oder benachbart zu der Verteilergehäuseunterseite (13) angeordnet sind.

3. Verteilervorrichtung nach Anspruch 1 oder 2,
**dadurch gekennzeichnet, dass** die Ausgangsöffnungen in einer die Verteilergehäuseunterseite mit der Verteilergehäuseoberseite verbindenden Verteilergehäuseseitenwand angeordnet sind.

4. Verteilervorrichtung nach einem der vorhergehenden Ansprüche,
**dadurch gekennzeichnet, dass** in der Verteilergehäuseoberseite keine Ausgangsöffnung angeordnet ist.

5. Verteilervorrichtung nach einem der vorhergehenden Ansprüche,
**dadurch gekennzeichnet, dass** das Verteilergehäuse eine Verteilergehäusebasis und einen mit der Verteilergehäusebasis lösbar verbundenen Verteilergehäusedeckel umfasst und dass der Verteilergehäusedeckel die Verteilergehäuseoberseite und eine Verteilergehäuseseitenwand aufweist, die sich von der Verteilergehäuseoberseite zu der Verteilergehäuseunterseite erstreckt.

6. Verteilervorrichtung nach einem der vorhergehenden Ansprüche,
**dadurch gekennzeichnet, dass** die Belüftungsöffnung durch ein Rückschlagventil (40) abgedichtet ist, welches ausgebildet ist, um den Austritt von Fluid aus dem Belüftungsraum durch die Belüftungsöffnung zu sperren und den Zufluss von Luft durch die Belüftungsöffnung in den Belüftungsraum freizugeben.

7. Verteilervorrichtung nach Anspruch 6,
**dadurch gekennzeichnet, dass** das Rückschlagventil durch eine Dichtungsmembran gebildet wird, die elastisch in eine Sperrstellung vorgespannt ist, in welcher der Austritt von Fluid aus dem Belüftungsraum durch die Belüftungsöffnung gesperrt ist und die durch einen relativen Unterdruck im Belüftungsraum gegenüber der Belüftungsöffnung in eine Offenstellung bewegbar ist, in welcher der Zufluss von Luft durch die Belüftungsöffnung in den Belüftungsraum freigegeben ist.

8. Verteilervorrichtung nach Anspruch 7,
**dadurch gekennzeichnet, dass** die Dichtungsmembran durch einen um den Einlasskanal angeordneten Elastomerring gebildet wird, insbesondere durch eine elastomere Ringscheibe.

9. Verteilervorrichtung nach einem der vorhergehenden Ansprüche,
**dadurch gekennzeichnet, dass** die Belüftungsöffnung im Bereich einer domartigen Auswärtswölbung der Verteilergehäuseoberseite angeordnet ist.

10. Verteilervorrichtung nach einem der vorhergehenden Ansprüche,
**dadurch gekennzeichnet, dass** die Verteilereinheit ein Dichtungselement umfasst, dass zwischen einer ersten Position, in der es zumindest eine der Mehrzahl von Ausgangsöffnungen gegen den Flüssigkeitsraum abdichtet und einer zweiten Position, in der es eine Fluidverbindung zwischen der zumindest einen der Mehrzahl von Ausgangsöffnungen und dem Flüssigkeitsraum herstellt, beweglich ist.

11. Verteilervorrichtung nach Anspruch 10,
**dadurch gekennzeichnet, dass** das Dichtungselement der Verteilereinheit ausgebildet ist, um jede der Ausgangsöffnungen in zeitlich wechselnder Abfolge mit dem Flüssigkeitsraum und mit dem Belüftungsraum zu verbinden.

12. Verteilervorrichtung nach einem der vorhergehenden Ansprüche,
**gekennzeichnet durch** eine in dem Innenraum angeordnete Zerkleinerungseinheit für Feststoffe in der feststoffhaltigen Flüssigkeit.

13. Verteilervorrichtung nach Anspruch 12,
**dadurch gekennzeichnet, dass** die Verteilereinheit die Zerkleinerungseinheit umfasst.

14. Verteilervorrichtung nach Anspruch 13,
**dadurch gekennzeichnet, dass** die relative Bewegung der Verteilereinheit eine Zerkleinerungswirkung durch die Zerkleinerungseinheit bewirkt.

15. Verteilervorrichtung nach Anspruch 12 oder 13 und Anspruch 10,
**dadurch gekennzeichnet, dass** die Zerkleinerungseinheit ein Schneidelement beinhaltet, dass integral mit dem Dichtungselement ist.

## Claims

1. A distributor device for solids-containing liquids comprising:
- A distributor housing (10) having a distributor housing bottom (13) and a distributor housing top (11) opposite the distributor housing bottom and enclosing an interior space divided into a fluid space into which the inlet opening opens and a ventilation space separate therefrom into which the ventilation opening opens,
- A plurality of exit ports (30a,b),
- An inlet opening (21) in the distributor housing,
- A ventilation opening (41) in the distributor housing,
- A distributor assembly (50) movable relative to the distributor housing and disposed in the distributor housing, the distributor assembly placing one, preferably each, of the outlet ports in fluid communication with the fluid chamber (32) and with the vent chamber (42) in time alternating sequence,
wherein relative movement of the distributor assembly alternately communicates an exit port of the plurality of exit ports with the fluid space and the ventilation space,
wherein the ventilation opening (41) is arranged in the distributor housing top (11),
**characterized in that** the inlet port opens into an inlet channel (20) that extends from the top of the distributor housing into the fluid space,
wherein the ventilation opening is formed by an annular gap around the inlet channel into which the inlet opening discharges.

2. Distributor device according to claim 1,
**characterized in that** the exit ports (30a,b) are located in or adjacent to the distributor housing bottom (13).

3. Distributor device according to claim 1 or 2,
**characterized in that** the exit ports are arranged in a distributor housing side wall connecting the distributor housing bottom side to the distributor housing top side.

4. Distributor device according to any one of the preceding claims,
**characterized in that** no exit ports are arranged in the distributor housing top.

5. Distributor device according to any of the preceding claims,
**characterized in that** the distributor housing comprises a distributor housing base and a distributor housing cover removably connected to the distributor housing base, and **in that** the distributor housing cover has the distributor housing top and a distributor housing side wall extending from the distributor housing top to the distributor housing bottom.

6. Distributor device according to any of the preceding claims,
**characterized in that** the ventilation opening is sealed by a check valve (40) configured to block the exit of fluid from the ventilation space through the ventilation opening and to release the inflow of air through the ventilation opening into the ventilation space.

7. Distributor device according to claim 6,
**characterized in that** the check valve is formed by a sealing membrane which is elastically biased into a blocking position in which the exit of fluid from the ventilation space through the ventilation opening is blocked and which is movable by a relative negative pressure in the ventilation space with respect to the ventilation opening into an open position in which the inflow of air through the ventilation opening into the ventilation space is released.

8. Distributor device according to claim 7,
**characterized in that** the sealing membrane is formed by an elastomer ring arranged around the inlet channel, in particular by an elastomer ring washer.

9. Distributor device according to any of the preceding claims,
**characterized in that** the ventilation opening is arranged in the region of a dome-like outward curvature of the distributor housing top.

10. Distributor device according to any one of the preceding claims,
**characterized in that** the distributor assembly comprises a sealing member movable between a first position in which it seals at least one of the plurality of exit ports from the fluid space and a second position in which it establishes fluid communication between the at least one of the plurality of exit ports and the fluid space.

11. Distributor device according to claim 10,
**characterized in that** the sealing member of the distributor unit is designed to connect each of the exit ports to the liquid space and to the ventilation space in time alternating sequence.

12. Distributor device according to any of the preceding claims,
**characterized by** a comminution unit for solids in the solids-containing liquid arranged in the interior space.

13. Distributor device according to claim 12,
**characterized in that** the distributor unit comprises the comminution unit.

14. Distributor device according to claim 13,
**characterized in that** the relative movement of the distributor unit causes a crushing action by the comminution unit.

15. Distributor device according to claim 12 or 13 and claim 10,
**characterized in that** the comminution unit includes a cutting element integral with the sealing member.

## Revendications

1. Dispositif de répartition pour des liquides contenant des matières solides, comprenant :
- un boîtier de répartition (10) qui présente un côté inférieur de boîtier de répartition (13) et un côté supérieur de boîtier de répartition (11) opposé au côté inférieur de boîtier de répartition et entoure un espace intérieur qui est divisé en un espace de liquide, dans lequel débouche l'ouverture d'entrée, et en un espace de ventilation séparé de celui-ci, dans lequel débouche l'ouverture de ventilation,
- une pluralité d'ouvertures de sortie (30a, b),
- une ouverture d'entrée (21) dans le boîtier de répartition,
- une ouverture de ventilation (41) dans le boîtier de répartition,
- une unité de répartition (50) mobile par rapport au boîtier de répartition et agencée dans le boîtier de répartition, qui met de préférence en liaison fluidique chacune des ouvertures de sortie dans un ordre chronologique avec l'espace de liquide (32) et avec l'espace de ventilation (42),
dans lequel le mouvement relatif de l'unité de répartition met en liaison une ouverture de sortie de la pluralité d'ouvertures de sortie alternativement avec l'espace de liquide et l'espace de ventilation,
dans lequel l'ouverture de ventilation (41) est agencée dans le côté supérieur de boîtier de répartition (11),
**caractérisé en ce que**
l'ouverture d'entrée débouche dans un canal d'admission (20) qui s'étend depuis le côté supérieur de boîtier de répartition dans l'espace de liquide,
dans lequel l'ouverture de ventilation est formée par une fente annulaire autour du canal d'admission, dans lequel débouche l'ouverture d'admission.

2. Dispositif de répartition selon la revendication 1,
**caractérisé en ce que** les ouvertures de sortie (30a, b) sont agencées dans ou de manière contiguë au côté inférieur de boîtier de répartition (13).

3. Dispositif de répartition selon la revendication 1 ou 2,
**caractérisé en ce que** les ouvertures de sortie sont agencées dans une paroi latérale de boîtier de répartition reliant le côté inférieur de boîtier de répartition au côté supérieur de boîtier de répartition.

4. Dispositif de répartition selon l'une des revendications précédentes,
**caractérisé en ce qu'**aucune ouverture de sortie n'est agencée dans le côté supérieur de boîtier de répartition.

5. Dispositif de répartition selon l'une des revendications précédentes,
**caractérisé en ce que** le boîtier de répartition comporte une base de boîtier de répartition et un couvercle de boîtier de répartition relié de manière amovible à la base de boîtier de répartition et que le couvercle de boîtier de répartition présente le côté supérieur de boîtier de répartition et une paroi latérale de boîtier de répartition qui s'étend depuis le côté supérieur de boîtier de répartition au côté inférieur de boîtier de répartition.

6. Dispositif de répartition selon l'une des revendications précédentes,
**caractérisé en ce que** l'ouverture de ventilation est rendue étanche par un clapet antiretour (40) qui est réalisé afin de bloquer la sortie de fluide de l'espace de ventilation par l'ouverture de ventilation et de libérer l'afflux d'air par l'ouverture de ventilation dans l'espace de ventilation.

7. Dispositif de répartition selon la revendication 6,
**caractérisé en ce que** le clapet antiretour est formé par une membrane de garniture d'étanchéité qui est précontrainte élastiquement dans une position de blocage, dans laquelle la sortie de fluide de l'espace de ventilation par l'ouverture de ventilation est bloquée, et qui est mobile par une dépression relative dans l'espace de ventilation par rapport à l'ouverture de ventilation dans une position ouverte, dans laquelle l'afflux d'air par l'ouverture de ventilation dans l'espace de ventilation est libéré.

8. Dispositif de répartition selon la revendication 7,
**caractérisé en ce que** la membrane de garniture d'étanchéité est formée par un anneau en élastomère agencé autour du canal d'admission, en particulier par un disque annulaire en élastomère.

9. Dispositif de répartition selon l'une des revendications précédentes,
**caractérisé en ce que** l'ouverture de ventilation est agencée dans la zone d'un bombement vers l'extérieur de type dôme du côté supérieur de boîtier de répartition.

10. Dispositif de répartition selon l'une des revendications précédentes,
**caractérisé en ce que** l'unité de répartition comporte un élément de garniture d'étanchéité qui est mobile entre une première position, dans laquelle il rend étanche au moins une de la pluralité d'ouvertures de sortie contre l'espace de liquide, et une seconde position, dans laquelle il établit une liaison fluidique entre l'au moins une de la pluralité d'ouvertures de sortie et de l'espace de liquide.

11. Dispositif de répartition selon la revendication 10,
**caractérisé en ce que** l'élément de garniture d'étanchéité de l'unité de répartition est réalisé afin de relier chacune des ouvertures de sortie dans un ordre chronologique à l'espace de liquide et à l'espace de ventilation.

12. Dispositif de répartition selon l'une des revendications précédentes,
**caractérisé par** une unité de broyage agencée dans l'espace intérieur pour des matières solides dans le liquide contenant des matières solides.

13. Dispositif de répartition selon la revendication 12,
**caractérisé en ce que** l'unité de répartition comprend l'unité de broyage.

14. Dispositif de répartition selon la revendication 13,
**caractérisé en ce que** le mouvement relatif de l'unité de répartition provoque une action de broyage par l'unité de broyage.

15. Dispositif de répartition selon la revendication 12 ou 13 et la revendication 10,
**caractérisé en ce que** l'unité de broyage contient un élément de coupe qui est réalisé d'un seul tenant avec l'élément de garniture d'étanchéité.
